# EUROPÄISCHE PATENTANMELDUNG

(11) **EP 1 681 487 A1**
(43) Veröffentlichungstag der Anmeldung: **19.07.2006**
(21) Anmeldenummer: 05027775.5
(22) Anmeldetag: 19.12.2005
(51) Int. Cl.: F16D 48/06, F16D 48/08

(54) **Hydraulische Kupplungsbetätigung für ein Kraftfahrzeug**

(30) Priorität: 14.01.2005 DE 102005001861
(71) Anmelder: Dr.Ing. h.c.F. Porsche Aktiengesellschaft, 70435 Stuttgart (DE)
(72) Erfinder: Kraxner, Dieter, 75449 Wurmberg (DE)

(57) **Zusammenfassung**

Die Erfindung betrifft eine hydraulische Kupplungseinrichtung für ein Kraftfahrzeug, mit einem dem Kupplungspedal (8) zugeordneten Geberzylinder (10) und einem die Kupplung (6) beaufschlagenden Nehmerzylinder (14), wobei Geber- und Nehmerzylinder (10, 14) in einer zwischen Kupplungspedal (8) und Kupplung (6) verlaufenden Hydraulikleitung (12) integriert sind, sowie mit einer in der Hydraulikleitung (12) angeordneten Einrichtung zur Steuerung bzw. Begrenzung des Volumenstromes der Hydraulikflüssigkeit.

Es wird vorgeschlagen, dass als Anfahrhilfe in der Hydraulikleitung (12) ein Steuerventil (16) vorgesehen ist, mit dem der Einrückvorgang der Kupplung (6) steuerbar ist.

## Beschreibung

Die Erfindung betrifft eine manuelle hydraulische Kupplungsbetätigung für ein Kraftfahrzeug gemäß den Merkmalen des Oberbegriffs des Patentanspruchs 1.

Bei manuell betätigbaren hydraulischen Kupplungseinrichtungen sind in der Hydraulikleitung integrierte Drosseleinrichtungen bekannt, mit deren Hilfe eine von der Strömungsrichtung abhängige, unterschiedliche Durchflusscharakteristik erzeugbar ist. So ist beispielsweise aus der DE 103 11 481 Al eine hydraulische Kupplungsbetätigung bekannt, bei der in der Hydraulikleitung ein in einem Zylinder längsverschiebbar geführter Kolben vorgesehen ist, durch den ein zu schnelles Einrücken der Fahrzeugkupplung, insbesondere beim ungewollten Abrutschen vom Kupplungspedal, verhindert wird. Weitere Ausführungsformen von Drosseleinrichtungen sind z.B. aus der DE 198 11 337 A1 oder DE 41 42 324 C2 bekannt.

Bei automatisierten Schaltgetrieben, bei denen das Ein- bzw. Ausrücken der Kupplung mit Hilfe entsprechender Ölförderpumpen erfolgt, kann das Öffnen und Schließen der Kupplung mit Hilfe von in den Hydraulikleitungen angeordneten Drucksensoren sowie Druckregelventilen gesteuert werden (siehe z.B. DE 101 34 121 A1).

Aufgabe der Erfindung ist es, die Funktionalität einer manuell betätigbaren hydraulischen Kupplungseinrichtung weiter zu verbessern, um z.B. eine Schlupfkontrolle, das Anfahren mit dem zweiten Gang zu ermöglichen oder Schäden der Kupplung durch ungewolltes schnelles Einkuppeln zu verhindern.

Die Aufgabe wird durch die im Patentanspruch 1 angegebenen Merkmale gelöst.

Während der eigentliche Ein- und Ausrückvorgang für die Kupplung weiterhin über eine Betätigung des Kupplungspedals erfolgt, kann auf vorteilhafte Art und Weise durch eine entsprechende Ansteuerung des in der Hydraulikleitung angeordneten Steuerventils der Kupplungs- Einrückvorgang gesteuert bzw. unterstützt werden. Damit ist ohne größere Zusatzaufwendungen die Funktionalität einer herkömmlich bedienbaren manuellen Kupplungseinrichtung erhöht.

Durch die in den Unteransprüchen angegebenen Merkmale sind weitere vorteilhafte Weiterbildungen und Ausgestaltungen der erfindungsgemäßen hydraulischen Kupplungseinrichtung möglich.

Der Öffnungsquerschnitt des Steuerventils, durch den die Einrückgeschwindigkeit der Kupplung beeinflussbar ist, ist auf vorteilhafte Art und Weise in Abhängigkeit vom Druck in der Hydraulikleitung steuerbar. Die Druckerfassung kann bspw. über einen in der Hydraulikleitung angeordneten Drucksensor erfolgen.

Alternativ bzw. ergänzend zur druckabhängigen Steuerung kann, bspw. zur Plausibilitätsprüfung, die Ausrückgeschwindigkeit des Kupplungspedals als Steuergröße mit hinzu gezogen werden.

Weiterhin ist es möglich, den Öffnungsquerschnitt des Steuerventils in Abhängigkeit von Motorparametern, wie bspw. der Motordrehzahl oder der Stellung der Drosselklappe zu regeln. Als weiterer Regelparameter für die Einrückgeschwindigkeit der Kupplung kann auch die Position und/oder die Verstellgeschwindigkeit des Gaspedals herangezogen werden. So kann bspw. beim Loslassen des Kupplungspedals über den Gaspedalwinkel und eventuell zusätzlich über die Gaspedal-Verstellgeschwindigkeit ein Einkuppelvorgang ausgelöst werden, der - ähnlich wie bei automatisierten Kupplungen - über einen Algorithmus regelbar ist. Wird beispielsweise vom Fahrer kein Gas gegeben und die Kupplung eingerückt, dann wird das Steuerventil über die Steuerelektronik nur leicht geöffnet, so dass der Volumenstrom in der Hydraulikleitung -unabhängig von der Geschwindigkeit mit der das Kupplungspedal eingerückt wird- reduziert ist. Hat die Kupplung ihren Schleifpunkt erreicht, kann das Fahrzeug ähnlich wie bei einem Automatgetriebe mit hydrodynamischen Wandler durch ein leichtes "Kriechen" fortbewegt werden.

Die erfindungsgemäße hydraulische Kupplungseinrichtung ist beispielsweise bei folgenden Anwendungen unterstützend einsetzbar:
1. als Anfahrhilfe für den zweiten Gang,
2. als Abwürgschutz für den Motor,
3. als Anfahrhilfe für einen Schnellstart, der so genannten "Kick-Down-Anfahrt",
4. als Schlupfkontrolle und
5. als Drosseleinrichtung zum Verhindern eines Missbrauchs, wenn der Fahrer ungewollt vom Kupplungspedal abrutscht.

### Beschreibung des Ausführungsbeispiels

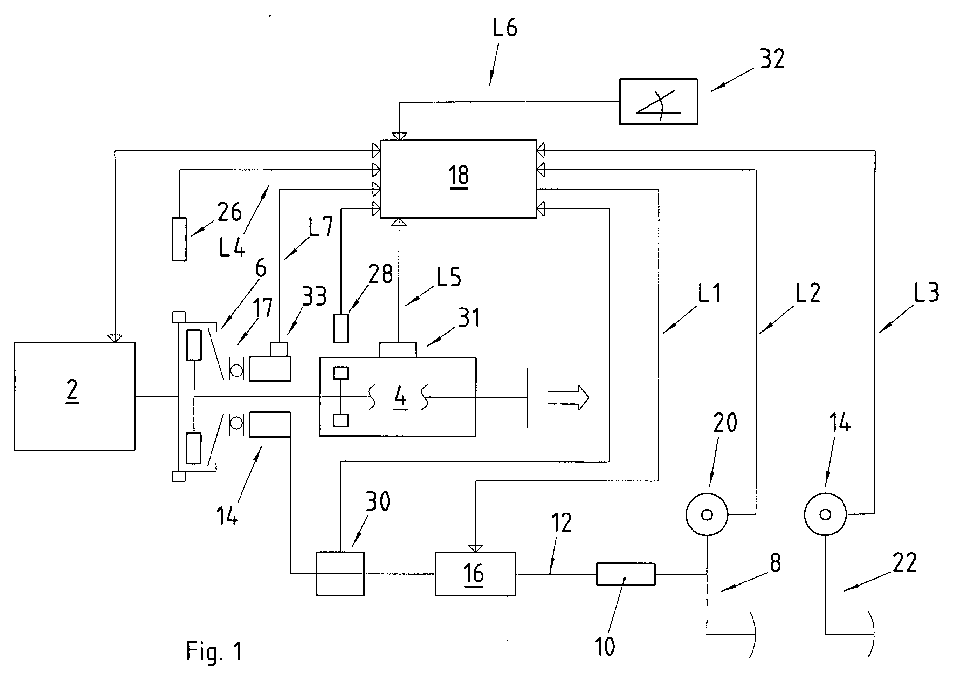

In der Zeichnung ist ein Ausführungsbeispiel der Erfindung dargestellt, das nachfolgend näher beschrieben ist.

Die einzige Figur zeigt schematisch einen Aufbau einer manuell betätigbaren hydraulischen Kupplungseinrichtung.

Mit dem Bezugszeichen 2 ist ein Verbrennungsmotor bezeichnet, dessen Motordrehmoment durch ein Wechselgetriebe 4 übersetzt, auf die Antriebsräder eines Kraftfahrzeuges übertragen wird. Zwischen Verbrennungsmotor 2 und Wechselgetriebe 4 ist eine Kupplung 6 angeordnet, die als lösbares Bindeglied zwischen Motor 2 und Wechselgetriebe 4 dient. Zur Betätigung der Kupplung 6 ist ein Kupplungspedal 8 vorgesehen, das über einen Drehpunkt an einem nicht näher dargestellten Fahrzeugaufbau schwenkbar gelagert ist. Am Kupplungspedal 8 greift eine nicht dargestellte Kolbenstange eines insgesamt mit 10 bezeichneten Geberzylinders an. Vom Geberzylinder 10 führt eine Hydraulikleitung 12 zu einem Nehmerzylinder 14. Der Nehmerzylinders 14 betätigt den Ausrückmechanismus 17 der Kupplung 6.

In der Hydraulikleitung 12 ist zwischen Geber- und Nehmerzylinder 12, 14 ein elektrisch ansteuerbares Steuerventil 16 angeordnet, dessen Funktionsweise später noch näher erläutert wird. Wie aus der Figur ersichtlich, ist das Steuerventil 16 über eine Leitung L1 mit einem Steuergerät 18 verbunden. Die Stellung des Kupplungspedals 8 wird mit Hilfe eines Positionsgebers 20 erfasst, der über eine elektrische Leitung L2 ebenfalls mit dem Steuergerät 18 verbunden ist. Die Stellung eines durch den Fahrer ebenfalls betätigbaren Gaspedals 22 - mit dem die Motordrosselklappe steuerbar ist - wird ebenfalls über einen Positionsgeber 24 erfasst, der über eine Leitung L3 mit dem Steuergerät 18 verbunden ist. Die Motordrehzahl ist über einen an der Kupplung angeordneten Drehzahlgeber 26 erfassbar, der über eine Leitung L4 mit dem Steuergerät 18 verbunden ist. Weiterhin ist am Getriebeeingang ein Drehzahlgeber 28 angeordnet; mit Hilfe eines zwischen Nehmerzylinder 14 und Druckregelventil 16 in der Hydraulikleitung 12 angeordneten Drucksensors 30 ist der Druck in der Hydraulikleitung 12 erfassbar. Darüber hinaus ist ein Gangstellungssensor 31, ein Sensor 32 zur Erfassung der Steigung des Fahrzeuges sowie ein Wegsensor 33 für den Nehmerzylinder 14 vorgesehen, die über Leitungen L5, L6 und L7 mit dem Steuergerät 18 verbunden sind.

Im Nachfolgenden wird die Funktionsweise der hydraulischen Kupplungseinrichtung näher beschrieben:
Das Auskuppeln erfolgt auf herkömmliche Art und Weise, d.h. die Fußkraft wird über das Kupplungspedal 8 auf den Kolben des Geberzylinders 10 übertragen. Der im Druckraum des Geberzylinders erzeugte Flüssigkeitsdruck 20 setzt sich in der Hydraulikleitung 12 fort und bewirkt am Kolben des Nehmerzylinders 14 eine Kraft, die den Ausrückmechanismus 17 betätigt und somit die Kupplung 6 ausrückt. Beim Ausrückvorgang ist das Steuerventil 16, das bspw. als elektrisch ansteuerbares Proportionalregelventil ausgebildet ist, stromlos und damit vollständig geöffnet, so dass die Hydraulikflüssigkeit ungehindert die Hydraulikleitung 12 durchströmen kann.

Beim Einkuppeln bzw. Einrücken der Kupplung wird das Steuerventil 16 bzw. dessen Öffnungsquerschnitt über das Steuergerät 18 in Abhängigkeit von folgenden Parametern angesteuert:
a) dem in der Hydraulikleitung (12) erfassten Druck bzw. Druckabfall und/oder
b) der Ausrückgeschwindigkeit des Kupplungspedals (8) und/oder
c) der Motordrehzahl und/oder der Stellung der Drosselklappe und/oder
d) der Position und/oder Verstellgeschwindigkeit des Gaspedals (22) und/oder
e) der Gangposition über den Gangstellungssensor (31) und/oder
f) der Getriebeeingangsdrehzahl über den Drehzahlgeber (28) und/oder
g) der Steigung über den Steigungssensor (32).

In ausgerückter Stellung kann das Gaspedal 22 in eine beliebige Stellung, die einer minimalen bis zu einer maximalen Motordrehzahl entspricht, eingestellt werden. Über das Steuerventil 16 ist die Hydraulikleitung 12 nunmehr vollständig geschlossen. Sobald der Einrückvorgang beginnt und das Kupplungspedal 8 vom Fahrer - egal wie schnell - gelöst wird, setzt unabhängig davon ein elektronischer Regelvorgang ein. Wird beispielsweise kein Gas gegeben, so wird über die Motorelektronik der Öffnungsquerschnitt des Steuerventils 16 nur leicht freigegeben, bis die Kupplung 6 den Schleifpunkt erreicht hat und somit ein leichtes "Kriechen" des Fahrzeuges - ähnlich einem Wandlerautomaten - initiiert wird. Wird dagegen beispielsweise mit maximaler Motordrehzahl eingekuppelt, dann wird über die Motorelektronik und das Steuerventil 16 der Volumenstrom der Hydraulikflüssigkeit auf einen Wert begrenzt, der ein Anfahren des Fahrzeuges ohne Durchdrehen der Räder (Stichwort: Traktionskontrolle) sicherstellt. Das gleiche trifft auf so genannte "Misuse"- Fälle zu, bei denen der Fahrer ungewollt vom Kupplungspedal 8 abgerutscht ist. Derartige Situationen können bspw. über den am Kupplungspedal 8 angeordneten Positionsgeber 20 erfasst werden, so dass über das Steuerventil 16 der Anfahrvorgang kontrollierbar ist. Wird eine Verstellgeschwindigkeit des Kupplungspedals 8 erfasst, die einer zuvor festlegbaren Grenze für ein "normales Einkuppeln" entspricht, dann bleibt der Einkuppelvorgang von der Steuerelektronik unbeeinflusst, d.h. das Steuerventil 16 bleibt stromlos und somit vollständig geöffnet. Das Steuerventil 16 bzw. dessen Ansteuerung kann weitere Zusatzfunktionen erfüllen:
Falls ein Einkuppelvorgang zu Schwingungen an der Kupplung oder an den Antriebsrädern führt - die über entsprechende Sensoren erfassbar sind - kann durch eine getaktete Ansteuerung des Steuerventils 16 eine Frequenz überlagert werden, die zu einer Eliminierung bzw. Abschwächung der Schwingungen führt. Weiterhin kann über den gesteuerten Einkuppelvorgang auch der Antriebsschlupf an den Reifen ohne Eingriff einer Traktionskontrolle beeinflusst werden.
Es ist eine kontrollierte Anfahrt im zweiten Gang möglich, bei dem Motormoment und Motordrehzahl entsprechend der zulässigen Kupplungsbelastung begrenzt wird. Zur Umsetzung dieser Funktion kann der Gangstellungssensor 31 heran gezogen werden, z.B. für den 1. Gang oder den Rückwärtsgang. Damit kann die Einschränkung von Motormoment und Motordrehzahl für diese Anfahrgänge aufgehoben werden. Über den Steigungssensor 32 kann ermittelt werden, ob eine Anfahrt im 2. Gang überhaupt zugelassen werden soll.

## Patentansprüche

1. Hydraulische Kupplungseinrichtung für ein Kraftfahrzeug, mit einem dem Kupplungspedal (8) zugeordneten Geberzylinder (10) und einem die Kupplung (6) beaufschlagenden Nehmerzylinder (14), wobei Geber- und Nehmerzylinder (10, 14) in einer zwischen Kupplungspedal (8) und Kupplung (6) verlaufenden Hydraulikleitung (12) integriert sind, sowie mit einer in der Hydraulikleitung (12) angeordneten Einrichtung zur Steuerung bzw. Begrenzung des Volumenstromes der Hydraulikflüssigkeit, **dadurch gekennzeichnet, dass** als Anfahrhilfe in der Hydraulikleitung (12) ein Steuerventil (16) vorgesehen ist, mit dem der Einrückvorgang der Kupplung (6) steuerbar ist.

2. Hydraulische Kupplungseinrichtung nach Anspruch 1, **dadurch gekennzeichnet, dass** der Öffnungsquerschnitt des Steuerventils (16) in Abhängigkeit vom Druck in der Hydraulikleitung (12) gesteuert ist.

3. Hydraulische Kupplungseinrichtung nach Anspruch 2, **dadurch gekennzeichnet, dass** in der Hydraulikleitung (12) zwischen Geber- und Nehmerzylinder (10, 14) ein Drucksensor (30) vorgesehen ist.

4. Hydraulische Kupplungseinrichtung nach Anspruch 1, **dadurch gekennzeichnet, dass** der Öffnungsquerschnitt des Steuerventils (16) in Abhängigkeit von der Ausrückgeschwindigkeit des Kupplungspedals (8) gesteuert ist.

5. Hydraulische Kupplungseinrichtung nach einem der vorhergehenden Ansprüche, **dadurch gekennzeichnet, dass** der Öffnungsquerschnitt des Steuerventils (16) in Abhängigkeit von Motorparametern, wie z.B. Motordrehzahl und/oder Position der Drosselklappe gesteuert ist.

6. Hydraulische Kupplungseinrichtung nach einem der vorhergehenden Ansprüche, **dadurch gekennzeichnet, dass** der Öffnungsquerschnitt des Steuerventils (16) in Abhängigkeit von Position und/oder Verstellgeschwindigkeit des Gaspedals (22) gesteuert ist.

7. Hydraulische Kupplungseinrichtung nach einem der vorhergehenden Ansprüche, **dadurch gekennzeichnet, dass** die Stellung des Kupplungs- und/oder Gaspedals (8, 22) durch jeweils einen Positionsgeber (20, 24) überwacht ist.

8. Hydraulische Kupplungsbetätigung nach einem der vorhergehenden Ansprüche, **gekennzeichnet durch** die Verwendung als
a) Anfahrhilfe für den zweiten Gang und/oder
b) Abwürgschutz für den Motor und/oder
c) Anfahrhilfe für einen Schnellstart, der sog. "Kick-Down-Anfahrt" und/oder
d) Schlupfkontrolle und/oder
e) "Peak-Torque-Limiter".
